# EUROPÄISCHE PATENTSCHRIFT

(11) **EP 3 833 885 B1**
(45) Veröffentlichungstag und Bekanntmachung des Hinweises auf die Patenterteilung: **10.08.2022**
(21) Anmeldenummer: 19734238.9
(22) Anmeldetag: 12.06.2019
(51) Int. Cl.: F16D 13/68, F16D 13/69

(54) **LAMELLENPAKET MIT GEZIELT EINGEBRACHTER AXIALER WEICHHEIT**
PLATE PACK WITH AXIAL SOFTNESS SPECIFICALLY APPLIED
PAQUET DE LAMELLES AVEC UNE SOUPLESSE AXIALE SPÉCIALEMENT APPLIQUÉE

(30) Priorität: 06.08.2018 DE 102018119002
(43) Veröffentlichungstag der Anmeldung: 16.06.2021
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2019/100536
(87) Internationale Veröffentlichungsnummer: WO 2020/030210

(56) Entgegenhaltungen:
- EP-A1- 0 647 792
- DE-A1-102007 024 114
- DE-A1-102015 213 953
- DE-C1- 3 320 977

## Beschreibung

Die vorliegende Erfindung betrifft ein Lamellenpaket für eine Kupplung in einem Antriebsstrang eines Kraftfahrzeugs gemäß dem Oberbegriff des Anspruchs 1, wobei Lamellen zum Kontaktieren von Gegenlamellen mit dem Ziel der Drehmomentübertragung vorhanden sind, wobei zumindest eine der Lamellen einen Grundkörper besitzt, der einen Kontaktbereich zum direkten oder indirekten Drehmomentaufnehmen oder - übertragen von oder auf eine Gegenlamelle besitzt, wobei ein Verzahnungsbereich vorhanden ist, um im drehmomentübertragenden Kontakt mit einem Lamellenträger zu stehen. Ferner betrifft die Erfindung auch ein Hybridmodul mit einer, bspw. als K0-Kupplung ausgebildeten, trockenen Kupplung, die ein erfindungsgemäßes Lamellenpaket besitzt.

Bei Lamellenkupplungen, insbesondere bei trockener Ausführung, treten beim Schließen der Kupplung (Momentenaufbau) in der Lamellenverzahnung Reibkräfte auf, welche die Anpresskraft und damit die Momentenkapazität der Kupplung verringern. Der Effekt wird umso größer, je mehr Lamellen eingesetzt werden. Bei automatisierten Kupplungssystemen existiert zudem das Problem, dass Reibwertschwankungen zu unerwünschten Momentensprüngen führen, wodurch eine gute Regelbarkeit nicht gegeben ist.

Es sind bereits verschiedene Maßnahmen zur Reduzierung der Reibung bekannt, bspw. durch Beschichtungen. Ferner existieren Konzepte zur Anbindung der Lamellen untereinander mittels Blatt- bzw. Wellfedern, wodurch erst gar keine Reibkraft entstehen kann. Ein solches Konzept offenbart bspw. die DE 10 2017 130 284 A1, welche eine Kupplung nach Art einer Mehrscheibenkupplung und einer Lamellenkupplung offenbart, welche Außenlamellen und Innenlamellen aufweist, die zur Drehmomentübertragung von einem Drehmomenteinleitungsbauteil zu einem Drehmomentausleitungsbauteil mittels einer Betätigungseinrichtung in drehmomentübertragenden Kontakt bringbar sind. Zwischen zwei benachbarten Außenlamellen ist jeweils zumindest ein Blattfederelement vorgespannt angeordnet, um die Außenlamellen zueinander zu beabstanden, wobei das Blattfederelement mit der jeweiligen benachbarten Außenlamelle drehfest und axial fest verbunden ist. Ferner wird auch ein Antriebsstrang für ein Kraftfahrzeug offenbart, mit zumindest einer Verbrennungskraftmaschine, einem Drehmomenteinleitungsbauteil, einem Drehmomentausleitungsbauteil und einer vorstehend beschriebenen Kupplung, wobei die Kupplung zwischen dem Drehmomenteinleitungsbauteil und dem Drehmomentausleitungsbauteil angeordnet ist. Dieses Konzept ist jedoch mit hohem Montageaufwand verbunden.

Die DE 10 2018 103 981 A1 offenbart eine Reibkupplung für einen Antriebsstrang eines Kraftfahrzeugs, mit einem Eingangsteil, mit einem durch zumindest einen Antriebsmotor um eine Drehachse drehbaren Außenlamellenträger, wobei an dem Außenlamellenträger zumindest eine Außenlamelle befestigt ist; einem Ausgangsteil mit einem Rotorträger und einem von dem Rotorträger getrennten Innenlamellenträger, wobei an dem Innenlamellenträger zumindest eine Innenlamelle befestigt ist; zumindest eine Federeinrichtung, mit der die zumindest eine Außenlamelle und die zumindest eine Innenlamelle zum Schließen der Reibkupplung mit einer Anpresskraft verspannbar sind; und zumindest eine Blattfeder, die mit dem Innenlamellenträger und dem Rotorträger derart verbunden ist, dass die zumindest eine Blattfeder bei Einleitung eines Drehmoments durch den Antriebsmotor die Anpresskraft mit einer Verstärkungskraft verstärkt.

Solche Reibkupplungen werden insbesondere als K0-Kupplungen in Hybridmodulen eingesetzt. Ein solches Hybridmodul ist bspw. aus der DE 10 2018 103 524 A1 bekannt. Diese offenbart ein Hybridmodul mit einer Rotationsachse für einen Antriebsstrang eines Kraftfahrzeugs mit zumindest den folgenden Komponenten: eine Drehmomentaufnahme zur Aufnahme eines Drehmoments von einer elektrischen Maschine; eine trockene Lamellenkupplung mit zwei Lamellenkörben, wobei in dem Außenkorb zumindest eine Außenlamelle und in dem Innenkorb eine zu der Anzahl der Außenlamellen korrespondierende Anzahl von Innenlamellen axial bewegbar eingehängt sind, sodass sie ein Lamellenpaket bilden, wobei zum Übertragen eines Drehmoments das Lamellenpaket axial verpressbar ist, wobei im Lamellenpaket die zumindest eine Außenlamelle und die korrespondierende Anzahl von Innenlamellen mittels paarig einander zugewandten Reibflächen eine Mehrzahl von Reibpaarungen bilden. Das Hybridmodul ist vor allem dadurch gekennzeichnet, dass zumindest eine der Gegenlamellen eine Mehrzahl von mechanisch abgesetzten Zahnflanschen aufweist, wobei die Zahnflansche derart abgesetzt sind, dass eine axiale Relativbewegung relativ zu der Reibfläche ermöglicht ist.

Weiterer Stand der Technik ist bspw. aus der DE 10 2018 110 547 A1 bekannt. Diese offenbart eine Reibkupplungseinrichtung, welche eine Kraftübertragungseinrichtung sowie eine Tellerfeder umfasst, wobei die Kraftübertragungseinrichtung zur Übertragung einer von der Tellerfeder ausgeübten oder ausübbaren im Wesentlichen axial ausgerichteten Druckkraft eingerichtet ist, und umfasst weiterhin ein mehrere Lamellen aufweisendes Reibpaket, mit welchem beim Zusammendrücken mittels einer axial wirkenden Kraft reibschlüssig Drehmoment übertragbar ist, wobei axial zwischen dem Reibpaket und der Kraftübertragungseinrichtung eine Federeinrichtung angeordnet ist, mit der in Abhängigkeit vom axialen Federweg der Federeinrichtung in axialer Richtung eine Federkraft auf das Reibpaket aufbringbar ist, wobei die Federeinrichtung derart angeordnet und eingerichtet ist, dass bei Belastung der Federeinrichtung mit der Druckkraft die Vektoren des von der Federeinrichtung in axialer Richtung erzeugten Kräftepaars im Wesentlichen die gleiche radiale Position aufweisen. Diese Reibkupplungseinrichtung ermöglicht unter Modulation der auf das Reibpaket wirkenden Anpresskraft das Starten eines angekoppelten Verbrennungsaggregates mittels einer angeschlossenen elektrischen Maschine ermöglicht.

Ferner ist aus der DE 10 2007 024 114 A1 ein Lamellenpaket bekannt, das auf den Oberbegriff des Anspruchs 1 lesbar ist.

Aufgabe der Erfindung ist es, die Nachteile aus dem Stand der Technik zu vermeiden oder wenigstens zu mildern und insbesondere eine Anbindung der Lamelle vorzusehen, die trotz Reibung zwischen der Lamellenverzahnung und dem Lamellenträger (Korb) keine, oder nur sehr geringe Anpresskraftverluste mit sich bringt.

Die Aufgabe der Erfindung wird durch ein Lamellenpaket gemäß Anspruch 1 gelöst.

Der Bereich axialer elastischer Weichheit ermöglicht, beim Schließen der Kupplung ein mögliches Verklemmen der Lamellen in dem Lamellenträger zu verhindern und Unregelmäßigkeiten in der wirkenden Kraft bzw. Momentensprünge zu vermeiden.

Vorteilhafte Ausführungsformen sind in den Unteransprüchen beansprucht und werden nachfolgend erläutert.

Der Bereich ist als ein Stahlfederblechbereich ausgebildet. Der Stahlfederblechbereich ist dabei so ausgebildet, dass er in axialer Richtung eine geringe Steifigkeit aufweist. Hierfür ist er vorzugsweise als ein dünn ausgeführtes Stahlblech ausgebildet.

Vorteilhafte Ausführungsformen sehen vor, dass der Stahlblechfederbereich ein integraler / einmaterialiger / einstückiger Bestandteil des Grundkörpers ist oder als ein davon separates Bauteil, vorzugsweise unlösbar, bspw. über eine Vernietung, am Grundkörper angebracht ist. Der Stahlblechfederbereich kann insbesondere dann als ein integraler Bestandteil des Grundkörpers vorgesehen sein, wenn die Lamelle als eine Reiblamelle ausgebildet ist, da der Grundkörper bei den Reiblamellen (aufgrund der Reibbeläge) deutlich dünner ausgeführt werden kann als bei einer als Stahllamelle ausgeführten Lamelle. Im Fall einer Stahllamelle ist der Stahlblechfederbereich vorzugsweise als ein separates Bauteil an dem Grundkörper anzubringen.

Als besonders vorteilhaft hat sich gezeigt, wenn der Grundkörper zumindest einen sich in Radialrichtung erstreckenden Arm aufweist. Vorzugsweise weist der Grundkörper mehrere solcher Arme auf, die weiter vorzugsweise über den Umfang gleichverteilt angeordnet sind.

Eine vorteilhafte Ausführungsform sieht hierbei vor, dass der Stahlblechfederbereich als Blattfeder oder Wellfeder ausgebildet ist. Dies ermöglicht das Verwenden von Standardteilen, wodurch Kosten reduziert werden können.

Ferner sieht eine Ausführungsform vor, dass in Radialrichtung zwischen dem Kontaktbereich und dem Stahlblechfederbereich eine Lücke ausgebildet ist. Dies ist insbesondere bei den integral ausgebildeten Lamellen-Stahlfederblechbereich-Kombinationen von Vorteil, um die Wirkung der axial elastischen Steifigkeit zu erhöhen bzw. zu verbessern.

Vorteilhafte Ausführungsformen sehen vor, dass der Verzahnungsbereich vom Kontaktbereich aus gesehen radial nach innen oder nach außen versetzt ist. Dadurch ist die Montage einfacher und der Bereich des Verzahnungseingriffs zwischen dem Verzahnungsbereich der Lamelle und dem Lamellenträger ist frei von anderen Komponenten, die den Verzahnungseingriff im Betrieb möglichweise negativ beeinflussen könnten.

Dabei hat es sich als vorteilhaft herausgestellt, wenn der Verzahnungsbereich lediglich abschnittsweise über den (Innen- / Außen-) Umfang ausgebildet ist. Entsprechend der Art der Lamelle ist der Verzahnungsbereich hierbei entweder am Außenumfang ausgebildet, was einer Außenlamelle entspricht, oder am Innenumfang ausgebildet, was einer Innenlamelle entspricht.

Erfindungsgemäß ist der Verzahnungsbereich integral mit dem Stahlblechfederbereich ausgebildet. Dadurch ist der Verzahnungsbereich in den Bereich der axialen Weichheit integriert und ermöglicht somit, dass ein gleichmäßiges Verschieben der Lamelle auch noch möglich ist, wenn sich der Verzahnungsbereich in dem Lamellenträger verklemmt. Ferner ist es von Vorteil, wenn sich ein Stahlblechfederbereich von der einen Seite eines Arms in Umfangsrichtung zur anderen Seite dieses Arms oder eines anderen Arms erstreckt, insbesondere dann, wenn der Stahlblechfederbereich als ein von dem Grundkörper der Lamelle separates Bauteil ausgebildet ist. Dieser Federbereich dient dazu, die in Axialrichtung wirkende elastische Weichheit einzubringen.

Ferner ist es von Vorteil, wenn der Grundkörper als ein dünnes Stahlblech mit in Axialrichtung geringer Steifigkeit ausgebildet ist. Dabei kann der Stahlblechfederbereich als ein integraler Bestandteil des Grundkörpers ausgebildet sein, wodurch der Montageaufwand reduziert wird.

Das erfindungsgemäße Hybridmodul kann sowohl mit einem achsparallelem E-Motor als auch mit einem koaxialem E-Motor versehen sein.

Mit anderen Worten besteht die Erfindung darin, dass die Lamelle derart ausgeführt wird, dass sie trotz reibungsbehafteter / klemmender Verzahnung eine axiale Verschiebung im Bereich der Reibfläche zulässt. Eine erste mögliche Ausführungsform sieht hierbei vor, dass die axiale Weichheit durch eine Wellfeder realisiert wird. Die Verzahnung zum Lamellenträger ist in die Wellfeder integriert. Eine solche Ausführungsform kann sowohl für Stahl- als auch für Reiblamellen eingesetzt werden. Die Wellfeder ist mit der Lamelle vernietet. Eine zweite beispielhafte Ausführungsform sieht vor, dass die axiale Weichheit in das Trägerblech bzw. die Lamelle integriert ist. Hierzu ist die Verzahnung freigespart und über einen gewissen Hebelarm an die eigentliche Lamelle angebunden.

Man kann also auch sagen, dass die Erfindung eine trockene Lamellenkupplung betrifft, die als eine K0-Kupplung in einem Hybridmodul zum An- und Abkoppeln eines Verbrennungsmotors an den und vom Antriebsstrang eines Kraftfahrzeuges ausgebildet ist. Bei dem Hybridmodul kann es sich um ein Hybridmodul mit koaxialem Elektromotor, dessen Rotor die K0-Kupplung umgibt, oder um ein Hybridmodul mit achsparallelem Elektromotor, der eine Riemenscheibe antreibt, die die K0-Kupplung umgibt, handeln. Hierfür werden die Lamellen in axialer Richtung weich angebunden. In einem ersten Ausführungsbeispiel wird die axiale Weichheit durch eine Wellfeder realisiert, wobei die Verzahnung zum Lamellenträger in die Wellfeder integriert ist. In einem zweiten Ausführungsbeispiel ist die axiale Weichheit in das Trägerblech bzw. die Lamellen integriert.

Die Erfindung kann weitergebildet dadurch werden, dass sich zwei an je einer Lamelle angebrachte Federeinrichtungen (direkt oder indirekt) aneinander (zur Axialkraftübertragung) abstützen.

Wenn die Federeinrichtungen als separate Bestandteile an der Lamelle befestigt sind, ist es von Vorteil, wenn sich die Federeinrichtungen unter Zwischenschaltung eines Niets aneinander abstützen.

Vorteilhafte Ausführungsformen sehen hierbei vor, dass jede Federeinrichtung durch einen Grundkörperbestandteil oder ein davon separates Bauteil gestellt ist.

Die Erfindung wird nachfolgend mit Hilfe von Figuren näher erläutert, in denen unterschiedliche Ausführungsformen dargestellt sind. Es zeigen:
- Fig. 1: eine Längsschnittansicht eines erfindungsgemäßen Lamellenpakets in einer ersten Ausführungsform;
- Fig. 2: eine Vorderansicht einer Lamelle mit Verzahnungsbereich in der ersten Ausführungsform;
- Fig. 3: eine Vorderansicht der Lamelle in einer zweiten beispielhaften Ausführungsform; und
- Fig. 4: die Lamelle aus Fig. 3 in einer perspektivischen Ansicht.

Die Figuren sind lediglich schematischer Natur und dienen ausschließlich dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

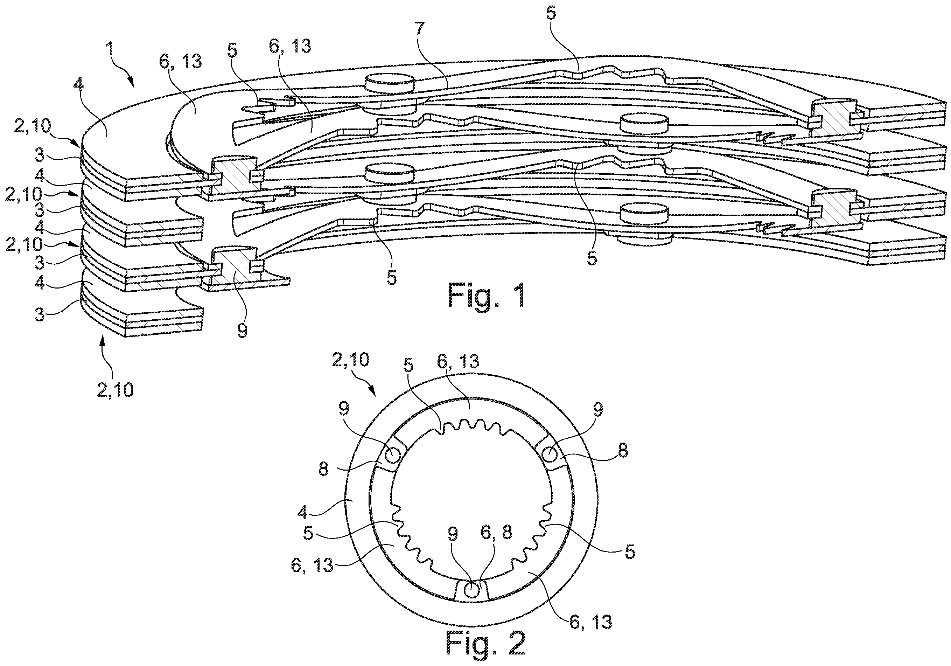

Fig. 1 zeigt eine Längsschnittansicht eines erfindungsgemäßen Lamellenpakets 1. Das Lamellenpaket 1 besteht aus vier Lamellen 2, wovon jede einen Grundkörper 3 besitzt, welcher bspw. aus Stahl hergestellt ist. Ferner weist der Grundkörper 3 einen Kontaktbereich 4 auf, welcher im montierten Zustand einer Kupplung mit Gegenlamellen (nicht gezeigt) in Kontakt kommt, um durch Reibschluss ein Drehmoment zu übertragen.

Radial innenliegend der Lamellen 2 befindet sich ein Verzahnungsbereich 5, über den die Lamellen 2 mit einem Lamellenträger (nicht gezeigt) drehmomentübertragend verbindbar sind. Zwischen dem Kontaktbereich 4 und dem Verzahnungsbereich 5 befindet sich ein Bereich 6, welcher eine elastische Weichheit in Axialrichtung einbringt. Das bedeutet, dass der Bereich 6 in Axialrichtung nur eine geringe Steifigkeit aufweist. In der hier gezeigten ersten beispielhaften Ausführungsform sind der Verzahnungsbereich 5 und der Bereich 6 integral / einteilig / einmaterialig und separat von der Lamelle 2 ausgebildet. Genauer gesagt, sind in dem gezeigten Beispiel der Verzahnungsbereich 5 und der Bereich 6 als eine Wellfeder 7 ausgebildet.

In Fig. 2 ist gut zu erkennen, dass der Grundkörper 3 sich nach radial innen erstreckende Arme 8 aufweist, an denen die Wellfeder 7 mittels eines Niets 9 mit der Lamelle 2 verbunden ist. Die Arme 8 sind hier über den Umfangs gleichverteilt angeordnet. Dadurch ist eine möglichst gleichmäßige Belastung der gesamten Wellfeder 7 sichergestellt.

Mit Bezug zurück auf Fig. 1 ist gut zu erkennen, dass zueinander benachbarte Wellfedern 7 derart angeordnet sind, dass sie sich jeweils mit einem Bereich, der zwischen zwei Nieten 9 bzw. zwischen zwei Armen 8 angeordnet ist, im Bereich des Niets 9 der benachbarten Wellfeder 7 abstützen. Das bedeutet, dass die Niete 9 bzw. die Arme 8 zweier zueinander benachbarter Lamellen 2 so versetzt zueinander angeordnet sind, dass die Niete 9 bzw. Arme 8 der einen Lamelle 2 exakt auf der Hälfte des Winkels, der sich zwischen zwei Nieten 9 bzw. Armen 8 der benachbarten Lamelle 2 befindet.

Die in Fig. 1 gezeigte Ausführungsform der Lamellen 2 stellt Innenlamellen 10 dar. Alternativ ist das Konzept auch für Außenlamellen denkbar, bei denen sich der Verzahnungsbereich 5 (und der Bereich 6) jedoch radial außerhalb des Kontaktbereichs 4 der Lamelle befindet. Darüber hinaus sind die in Fig. 1 gezeigten Lamellen 2 als Reiblamellen ausgeführt. Jedoch ist es auch denkbar, dass das Konzept bei Stahllamellen Anwendung findet.

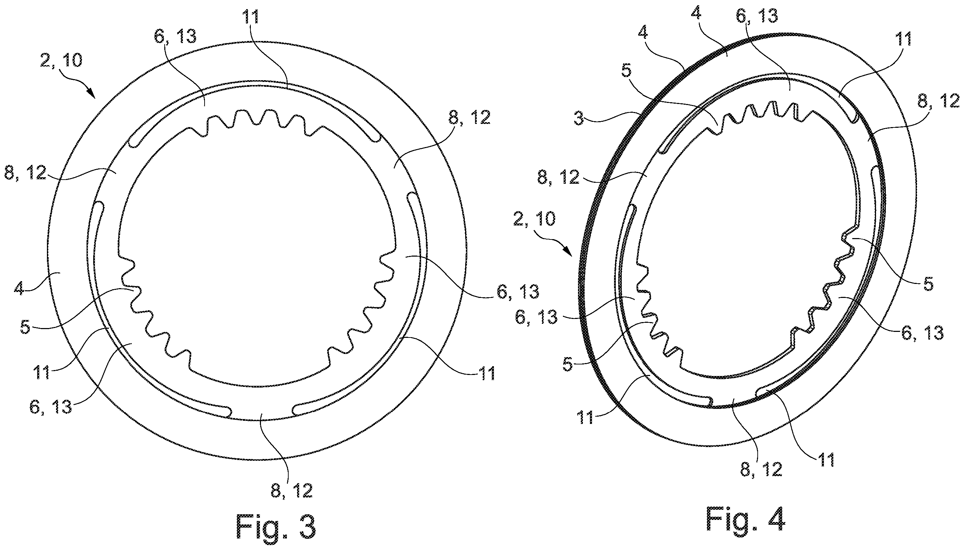

Fig. 3 und Fig. 4 zeigen eine zweite beispielhafte Ausführungsform mit der als Innenlamelle 10 ausgebildeten Lamelle 2. In der hier gezeigten Ausführungsform ist der Grundkörper 3 der Lamelle 2 integral / einteilig / einmaterialig mit dem Bereich gezielter axialer Weichheit 6 und dem Verzahnungsbereich 5 ausgebildet. Auch in diesem Ausführungsbeispiel ist der Bereich 6 über Arme 8 mit dem Grundkörper 3 verbunden, wobei hier jedoch der Grundkörper 3, die Arme 8 und der Bereich 6 integral, also einteilig / einmaterialig ausgebildet sind. Dabei ist zwischen dem Kontaktbereich 4 und dem Bereich 6 (mit dem Verzahnungsbereich 5) eine Lücke 11 ausgespart, wodurch der Bereich 6 in Radialrichtung gesehen beabstandet zum Kontaktbereich 4 ist und der Arm 8 dient dabei quasi als eine Art Hebelarm, der ermöglicht, dass sich der Bereich 6 (und der Verzahnungsbereich 5) unter Belastung aufgrund ihrer geringen Steifigkeit in Axialrichtung elastisch verformen, ohne dass sich der Grundkörper 3, insbesondere der Kontaktbereich 4, (elastisch) verformt. Die Arme 8 in dieser Ausführungsform ähneln aufgrund der Lücke 11, die zwischen zwei zueinander benachbarten Armen 8 und zwischen dem Kontaktbereich 4 und dem Bereich 6 ausgebildet sind, an Stege, weshalb die Arme 8 auch als Stege 11 bezeichnet werden können.

Insbesondere für das zweite Ausführungsbeispiel kann der Bereich 6, welcher die axiale Weichheit aufweist, auch als Stahlblechfederbereich 13 bezeichnet werden. Jedoch stellt auch die im ersten Ausführungsbeispiel eingesetzte Wellfeder 7 einen Stahlblechfederbereich dar, weshalb der Bereich 6 allgemein als Stahlblechfederbereich 13 bezeichnet werden kann.

## Patentansprüche

1. Lamellenpaket (1) für eine Kupplung in einem Antriebsstrang eines Kraftfahrzeugs, wobei Lamellen (2) zum Kontaktieren von Gegenlamellen mit dem Ziel der Drehmomentübertragung vorhanden sind, wobei zumindest eine der Lamellen (2) einen Grundkörper (3) besitzt, der einen Kontaktbereich (4) zum Drehmomentaufnehmen oder -übertragen von oder auf eine Gegenlamelle besitzt, wobei ein Verzahnungsbereich (5) vorhanden ist, um im drehmomentübertragenden Kontakt mit einem Lamellenträger zu stehen, wobei zwischen dem Kontaktbereich (4) und dem Verzahnungsbereich (5) ein Bereich (6) gezielter elastischer Weichheit, der als ein Stahlfederblechbereich (13) ausgebildet ist, in Axialrichtung eingebracht ist, **dadurch gekennzeichnet, dass** der Verzahnungsbereich (5) integral mit dem Stahlblechfederbereich (13) ausgebildet ist.

2. Lamellenpaket (1) gemäß Anspruch 1, **dadurch gekennzeichnet, dass** der Stahlblechfederbereich (13) ein integraler Bestandteil des Grundkörpers (3) ist oder als ein davon separates Bauteil (7) am Grundkörper (3) angebracht ist.

3. Lamellenpaket (1) gemäß Anspruch 1 oder 2, **dadurch gekennzeichnet, dass** der Grundkörper (3) zumindest einen sich in Radialrichtung erstreckenden Arm (8) aufweist.

4. Lamellenpaket (1) gemäß eine der Ansprüche 1 bis 3, **dadurch gekennzeichnet, dass** der Stahlblechfederbereich (13) als Blattfeder oder Wellfeder (7) ausgebildet ist.

5. Lamellenpaket (1) gemäß einem der Ansprüche 1 bis 4, **dadurch gekennzeichnet, dass** in Radialrichtung zwischen dem Kontaktbereich (4) und dem Stahlblechfederbereich (13) eine Lücke (11) ausgebildet ist.

6. Lamellenpaket (1) gemäß einem der Ansprüche 1 bis 5, **dadurch gekennzeichnet, dass** der Verzahnungsbereich (5) vom Kontaktbereich (4) aus gesehen radial nach innen versetzt ist.

7. Lamellenpaket (1) gemäß Anspruch 6, **dadurch gekennzeichnet, dass** der Verzahnungsbereich (5) lediglich abschnittsweise über den Umfangs ausgebildet ist.

8. Hybridmodul mit einer Kupplung, die ein Lamellenpaket (1) nach einem der vorhergehenden Ansprüche besitzt.

## Claims

1. A plate pack (1) for a clutch in a drivetrain of a motor vehicle, wherein plates (2) are provided for contacting counter plates in order to transfer torque, wherein at least one of the plates (2) has a main body (3) having a contact region (4) for absorbing torque from or transferring torque to a counter plate, wherein a toothed region (5) is provided for being in torque-transmitting contact with a plate carrier, wherein a region (6) of specific elastic softness, which is formed as a steel spring plate region (13), is introduced in the axial direction between the contact region (4) and the toothed region (5), **characterised in that** the toothed region (5) is formed integrally with the steel spring plate region (13).

2. The plate pack (1) according to claim 1, **characterised in that** the steel spring plate region (13) is an integral component of the main body (3) or is applied on the main body (3) as a separate component (7) therefrom.

3. The plate pack (1) according to claim 1 or 2, **characterised in that** the main body (3) has at least one arm (8) extending in the radial direction.

4. The plate pack (1) according to one of claims 1 to 3, **characterised in that** the steel spring plate region (13) is formed as a leaf spring or wave spring (7).

5. The plate pack (1) according to one of claims 1 to 4, **characterised in that** a gap (11) is formed in the radial direction between the contact region (4) and the steel spring plate region (13).

6. The plate pack (1) according to one of claims 1 to 5, **characterised in that** the toothed region (5) is offset radially inwards as viewed from the contact region (4).

7. The plate pack (1) according to claim 6, **characterised in that** the toothed region (5) is only formed in sections around the circumference.

8. A hybrid module with a clutch, which has a plate pack (1) according to one of the preceding claims.

## Revendications

1. Paquet de lamelles (1) pour un embrayage dans une chaîne cinématique d'un véhicule automobile, dans lequel des lamelles (2) sont présentes pour venir en contact avec des contrelamelles dans un but de transmission de couple, au moins une des lamelles (2) possédant un corps de base (3), qui possède une zone de contact (4) pour recevoir ou transmettre le couple depuis ou à une contre-lamelle, une zone de denture (5) étant présente afin d'être en contact de transmission de couple avec un support de lamelles,entre la zone de contact (4) et la zone de denture (5), une zone (6) avec une souplesse élastique spéciale, qui est formée comme une zone de ressort en tôle d'acier (13), étant appliquée dans la direction axiale, **caractérisé en ce que** la zone de denture (5) est formée d'un seul tenant avec la zone de ressort en tôle d'acier (13).

2. Paquet de lamelles (1) selon la revendication 1, **caractérisé en ce que** la zone de ressort en tôle d'acier (13) est un élément intégral du corps de base (3) ou est appliquée sous la forme d'un élément (7) qui en est séparé sur le corps de base (3).

3. Paquet de lamelles (1) selon la revendication 1 ou 2, **caractérisé en ce que** le corps de base (3) présente au moins un bras (8) s'étendant dans la direction radiale.

4. Paquet de lamelles (1) selon l'une quelconque des revendications 1 à 3, **caractérisé en ce que** la zone de ressort en tôle d'acier (13) est conçue comme un ressort à lames ou un ressort ondulé (7).

5. Paquet de lamelles (1) selon l'une quelconque des revendications 1 à 4, **caractérisé en ce que** dans la direction radiale entre la zone de contact (4) et la zone de ressort en tôle d'acier (13) est formé un dégagement (11).

6. Paquet de lamelles (1) selon l'une quelconque des revendications 1 à 5, **caractérisé en ce que** la zone de denture (5) est décalée radialement vers l'intérieur, vue depuis la zone de contact (4).

7. Paquet de lamelles (1) selon la revendication 6, **caractérisé en ce que** la zone de denture (5) est formée uniquement à certains endroits sur la circonférence.

8. Module hybride comprenant un embrayage qui possède un paquet de lamelles (1) selon l'une quelconque des revendications précédentes.
